Europäisches Patentamt

(19) European Patent Office

Office européen des brevets

(11) EP 0 810 781 A2

(12) EUROPEAN PATENT APPLICATION

(43) Date of publication:
03.12.1997 Bulletin 1997/49

(51) Int. Cl.$^6$: H04N 5/44

(21) Application number: 97301309.7

(22) Date of filing: 27.02.1997

(84) Designated Contracting States:
DE FR GB

(30) Priority: 31.05.1996 KR 9619232

(71) Applicant:
Samsung Electronics Co., Ltd.
Suwon-City, Kyungki-do 441-742 (KR)

(72) Inventor: Baek, Seung-Ung
Suwon-city, Kyungki-do (KR)

(74) Representative:
Chugg, David John et al
Appleyard Lees,
15 Clare Road
Halifax, West Yorkshire HX1 2HY (GB)

(54) Vertical compression circuit of image playback system

(57) A vertical compression circuit of an image play-back system displaying an image through interlaced scanning. It includes: a line memory unit for storing and outputting a filtering coefficient or storing and outputting the sum of its output and a filtering coefficient externally input, according to the input of the feedback control signal; a mode counter for counting horizontal lines within one section of vertical lines and outputting the counting result while outputting a memory line designating signal, corresponding to the compression mode signal; a coefficient selection signal generating unit, for outputting a coefficient selection signal to choose from first and second filtering coefficients, corresponding to the compression mode signal, and for outputting a feedback control signal; a first coefficient selecting unit, for generating coefficients and outputting the coefficient corresponding to the compression mode selected by the first coefficient selection signal; a second coefficient selecting unit for generating coefficients and storing the coefficient, corresponding to the compression mode selected by the second coefficient selection signal, in line memory; and a unit for adding up the outputs of the first coefficient selecting unit and the line memory unit and storing the result in video memory.

Fig. 2

## Description

This invention relates to a circuit for horizontally and vertically compressing image signals in an image playback system.

Generally, image playback systems having functions such as a double window, picture in picture (PIP), and multichannel, include a compression filter, which is a compression circuit, for compressing the horizontal and vertical lines of image signals.

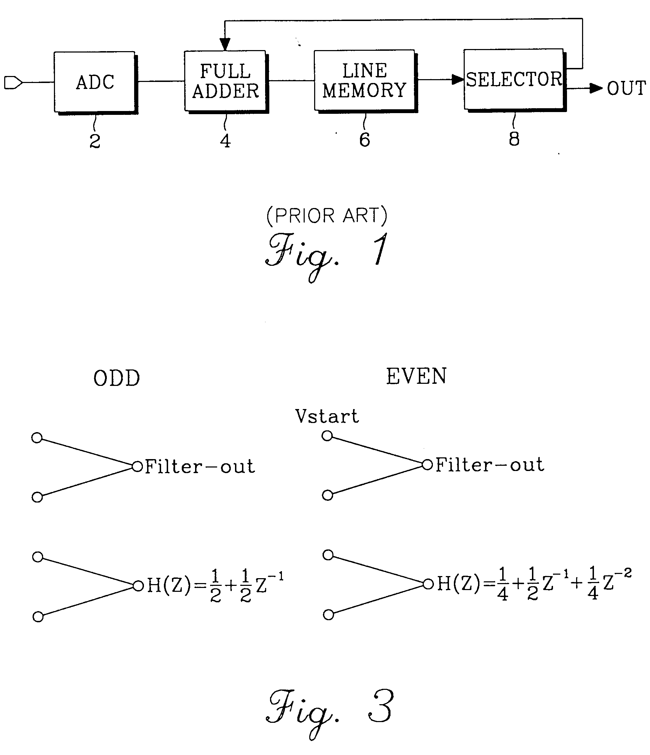

Figure 1 is a block diagram of a vertical compression circuit according to prior art. This vertical compression circuit includes: an analog to digital converter (ADC) 2, for converting an analog image signal input into a digital image signal; the full adder 4, for outputting data after full-adding the output of the ADC 2 and other input data; the line memory 6, for storing the output of the full adder 4; and the selector 8, for controlling the output of the line memory 6.

In cases where the structure of the compression filter of Figure 1 is "$d_{n-1} \cdot h_{n-1} + d_n \cdot h_n + d_{n+1} \cdot h_{n+1}$", the data $d_{n+1}$, at line n+1 is stored as $d_{n+1} \cdot h_{n+1}$ after being multiplied by $h_{n+1}$. The data $d_n$ at line $d_n$ is added to $d_{n+1} \cdot h_{n+1}$ after being multiplied by $h_n$. The sum $h_{n+1} \cdot d_{n+1} + h_n \cdot d_n$ is stored in line memory 6. Data $d_{n-1}$ is multiplied by $h_{n-1}$, and the result is added to the above sum. Therefore, data $h_{n+1} \cdot d_{n+1} + h_n \cdot d_n + h_{n-1} \cdot d_{n-1}$ is stored in external memory, although not shown in the drawings, after being stored in line memory 6.

However, the conventional compression circuit described above has only one image data compression mode, "1/3", and it is difficult to extend the compression mode to execute various compression modes. In cases where image data is progressively input, it must be progressively displayed causing picture tremor during playback.

An objective of embodiments of the present invention is to provide a compression circuit applicable to various compression modes, and for outputting image data as an interlaced scan even though the data is received in as a progressive scan.

Another objective of preferred embodiments is to provide a vertical filter for efficiently performing various vertical compressions such as double windows and multi-PIPs, and for outputting the display as an interlaced scan.

According to a first aspect of the present invention a vertical compression circuit of an image playback system, which displays images as an interlaced scan, includes: a line memory unit for storing and outputting a filtering coefficient, or storing and outputting a filtering coefficient which is the sum of its output and a filtering coefficient, which is externally input, according to an input of a feedback control signal; a mode counter for counting horizontal lines within one section of vertical lines, and outputting the counting result while outputting a memory line designating signal for designating a line stored in the video random access memory, responding to a compression mode signal; a coefficient selection signal generating, unit for outputting a coefficient selection signal for choosing first and second filtering coefficients, responding to the compression mode signal, and for outputting a feedback control signal; a first coefficient selecting unit for generating coefficients corresponding to various compression modes, and outputting the coefficient corresponding to the compression mode, selected by the first coefficient selection signal; a second coefficient selecting unit for generating coefficients corresponding to various compression modes and outputting the coefficient corresponding to the compression mode, selected by the second coefficient selection signal, into the line memory unit; and unit for adding the outputs of the first coefficient selecting unit and the line memory unit, and for supplying a sum added up to the video memory.

Preferably, said coefficient selection signal generating unit comprises a first coefficient selection signal generating unit and a second coefficient selection signal generating unit.

The first coefficient selection signal generating unit preferably generates the first coefficient selection signal according to inputs designating vertical compression mode, interlaced/progressive scanning mode, ODD/EVEN, and the output from the mode counter and further generates the feedback control signal.

Preferably, the second coefficient selection signal generating unit generates the second coefficient selection signal according to inputs designating vertical compression mode, interlaced/progressive scanning mode, ODD/EVEN, and the output from the mode counter.

Preferably, the first coefficient selecting unit comprises a first coefficient generator and a first multiplexer, the first multiplexer being adapted to receive the first coefficient selection signal.

The second coefficient selecting unit preferably comprises a second coefficient generator and a second multiplexer, the second multiplexer being adapted to receive the second selection signal.

Preferably, the feedback control signal is input to a first input of an AND gate, and a second input of said AND gate is connected to the output of the line memory unit.

Preferably, the AND gate has its output connected to a first input of an adder, a second input of said adder is connected to receive the output of the second coefficient selecting unit and a summed output from the adder is received at the input of said line memory unit.

For a better understanding of the invention, and to show how embodiments of the same may be carried into effect, reference will now be made, by way of example, to the accompanying diagrammatic drawings, in which:

Figure 1 is a block diagram of a vertical compression circuit of an image playback system according to prior art;

Figure 2 is a block diagram of a vertical compression circuit according to a preferred embodiment of the present invention;

Figure 3 is an illustration showing a correlation of the vertical compression according to the present invention; and

Figure 4 is a timing chart showing the operation of Figure 2.

In the following description, like reference numerals denote like or similar components.

With reference to the attached drawings, a preferred embodiment of the present invention is described below in detail. In the drawings, there appear many particular details for executing a vertical compression function in order to help general understanding of the present invention. It is obvious for a person having common knowledge on this technology that the present invention can be embodied without the particular details.

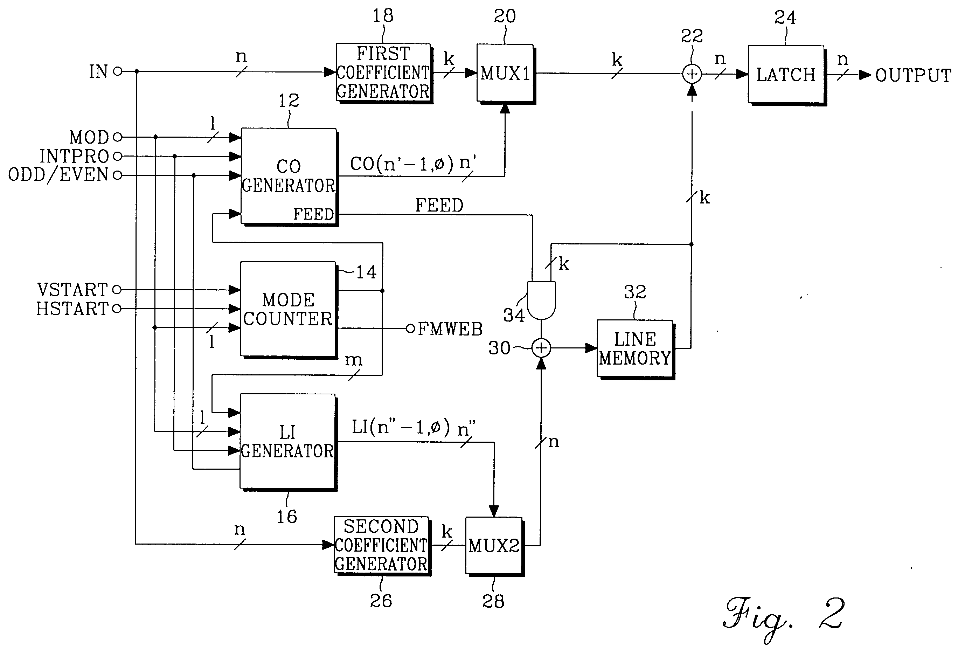

In Figure 2, MOD stands for a compression mode signal determining a vertical compression mode. INTPRO which is a scanning selection signal, has a value of 1 in for interlaced scanning, and 0 for progressive scanning. ODD/EVEN is a signal indicating an odd/even field. VSTART is a signal controlling a start of vertical register, and HSTART is a signal controlling a start of horizontal register.

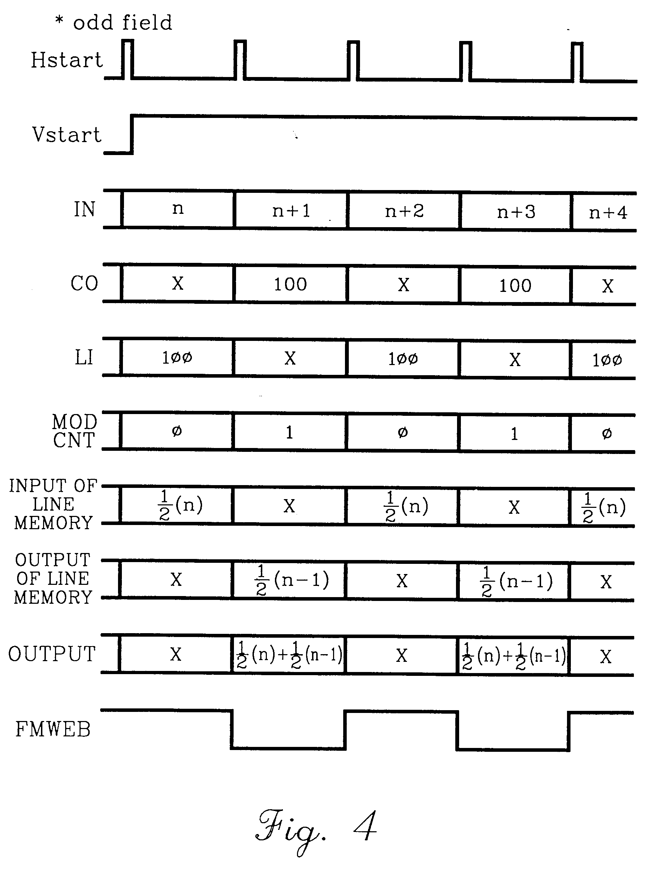

Figure 3 illustrates a correlation of vertical lines of odd and even, and the output of filtering, in case of an interlacing mode in which a vertical compression mode is 1/2.

Figure 4 is a timing chart showing the operation of Figure 2, where the scanning mode is interlaced, the vertical compression mode is 1/2, and the vertical compression correlation of odd and even fields is like Figure 3.

Referring to Figures 3 and 4, the operation of Figure 2 is described below in detail.

Data of n bit from a data input node IN, is input into the first and second coefficient generators 18 and 26. The first and second coefficient generators 18 and 26, generate filtering coefficients corresponding to various vertical compression modes, and send them to multiplexers (MUX) connected to the output nodes of each generator. The first and second coefficient generators 18 and 26 produce an output which is the result of an operation on the n bit input and data for all vertical compression modes; 1/4z, 1/8z, 3/8z, 1/2Z, and so on. Here, the first coefficient generator 18 directly outputs the data into the final output "OUTPUT". The output of second coefficient generator 26 is sent to line memory 32. This will be explained later.

Mode counter 14 counts the horizontal register start signals, HSTART, within the vertical register start signal, VSTART, which is externally input, as many as taps established by the vertical compression mode signal MOD defining the vertical compression mode, and then outputs the result. For example, in cases where the tap is five, it counts as the following, "0→1→2→3→4→0", and the tap is 2, "0→1→0". Mode counter 14 outputs a counting signal into CO and LI generators 12 and 16. At the same time, it generates the memory line specifying signal FMWEB for designating the horizontal line registered in a video memory, although not shown in the drawings.

CO generator 12, generates the first coefficient selection signal corresponding to the vertical compression mode MOD, interlaced/progressive scanning mode INTPRO, ODD/EVEN, and mode counting signal, sending it to MUX1 20. For example, CO generator 12 will generate the first coefficient selection signal 1 if the mode count signals is "000". It will generate the signal 1/8, if the input is "001". The first coefficient selection signal determines which, among the filtering coefficients generated by first coefficient generator 18, would be selected. MUX1 20 selects the coefficient corresponding to the first coefficient selection signal, and outputs it to arithmetic adder 22. Adder 22 sums the outputs of the MUX1 20 and line memory 32. The result is registered in video memory after passing through the latch 24.

LI generator 16, generates the second coefficient selection signal for selecting one of filtering coefficients generated from the second coefficient generator 26 by each mode, according to the inputs of the same signals as those supplied to CO generator 12. LI generator 16 sends the second coefficient selection signal to the MUX2 28. One of the filtering coefficients output from the second coefficient generator 26, is sent to the line memory 32 through the adder 30.

The data of the filtering coefficient which is stored in line memory 32, is selected according to a feedback control signal FEED from CO generator 12. If feedback control signal FEED is "1", the AND gate 34 will be enabled. Therefore, the filtering coefficient data which is generated by the second coefficient generator 26 and multiplexed by MUX2 28, is added to the data output from line memory 32 by the adder 30, and the result is registered in memory 32. If the feedback control signal FEED is "0", the data output from the line memory 32 is intercepted by the disabled AND gate. Therefore, only the filtering coefficient data which is selected by MUX 28 after being output from the second coefficient generator 26, is registered in line memory 32. The data output from line memory 32 is added to the output of the MUX1 20 by the adder 22. The sum is registered in video memory.

A vertical register timing is generated between odd and even fields where data is input in an interlaced form or progressive scanning, for maintaining the interlaced scanning. When the data is input in interlaced mode and the vertical compression is 1/2, the vertical register timings,

$$H(Z) = \frac{1}{2} + \frac{1}{2}z^{-1}$$

and

$$H(Z) = \frac{1}{4} + \frac{1}{2}z^{-1} + \frac{1}{4}Z^{-2}$$

shown in

Figure 3, are generated. Here, if it is assumed that CO "100→ 1/2", "010→ 1/4", and LI "100→ 1/2", "010→ 1/4", the timing will be generated as Figure 4.

As described above, it is possible to simply construct the vertical compression modes for a display in interlaced scanning mode, for example, the various vertical compression filters such as 1/2, 1/3, 2/3 and so on, using one line memory.

In the preferred embodiment of the present invention, the FMWEB is generated through the mode counter, but it will be obvious for those skilled in the art that a different structure is available.

The present invention implements the vertical compression filter flexibly and reliably, corresponding to the various vertical compression modes, thereby simplifying its hardware.

Therefore, it should be understood that the present invention is not limited to the particular embodiment disclosed herein as the best mode contemplated for carrying out the present invention, but rather that the present invention is not limited to the specific embodiments described in this specification, except as defined in the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A vertical compression circuit for an image playback system displaying an image through interlaced scanning, comprising:

a line memory unit (32) for storing and outputting a filtering coefficient, or storing and outputting a filtering coefficient which is a sum of its output and a filtering coefficient externally input, according to an input of a feedback control signal;

a mode counter (14) for counting horizontal lines within one section of vertical lines and outputting the result while outputting a memory line designating signal for designating a line stored in video random access memory, responding to a compression mode signal;

a coefficient selection signal generating unit (12, 16) for outputting a coefficient selection signal for selecting first and second filtering coefficients, responding to the compression mode signal, and for sending the feedback control signal to the memory (32);

a first coefficient selecting unit (18, 20) for generating coefficients corresponding to various compression modes and outputting the coefficient corresponding to the compression mode, selected by the first coefficient selection signal;

a second coefficient selecting unit (26, 28) for generating coefficients corresponding to various compression modes and outputting the coefficient corresponding to the compression mode, selected by the second coefficient selection signal, into the line memory unit (32); and

a unit (22) for adding up the outputs of the first coefficient selecting unit (18, 20) and the line memory unit (32), and for sending the result to video memory.

2. A circuit according to claim 1, wherein said coefficient selection signal generating unit comprises a first coefficient selection signal generating unit (12) and a second coefficient selection signal generating unit (16).

3. A circuit according to claim 2, wherein the first coefficient selection signal generating unit (12) generates the first coefficient selection signal according to inputs designating vertical compression mode, interlaced/progressive scanning mode, ODD/EVEN, and the output from the mode counter (14) and further generates the feedback control signal.

4. A circuit according to claim 2 or 3, wherein the second coefficient selection signal generating unit (16) generates the second coefficient selection signal according to inputs designating vertical compression mode, interlaced/progressive scanning mode, ODD/EVEN, and the output from the mode counter (14).

5. A circuit according to any of the preceding claims, wherein the first coefficient selecting unit comprises a first coefficient generator (18) and a first multiplexer (20), the first multiplexer (20) being adapted to receive the first coefficient selection signal.

6. A circuit according to any of the preceding claims, wherein the second coefficient selecting unit comprises a second coefficient generator (26) and a second multiplexer (28), the second multiplexer being adapted to receive the second selection signal.

7. A circuit according to any of the preceding claims, wherein the feedback control signal is input to a first input of an AND gate (34), and a second input of said AND gate (34) is connected to the output of the line memory unit (32).

8. A circuit according to claim 7, wherein the AND gate (34) has its output connected to a first input of an adder (30), a second input of said adder (30) is connected to receive the output of the second coefficient selecting unit (26, 28) and a summed output from the adder (30) is received at the input of said line memory unit (32).

ADC  FULL ADDER  LINE MEMORY  SELECTOR  → OUT

2   4   6   8

(PRIOR ART)

*Fig. 1*

ODD                          EVEN

Vstart

Filter-out                   Filter-out

$H(Z)=\frac{1}{2}+\frac{1}{2}Z^{-1}$       $H(Z)=\frac{1}{4}+\frac{1}{2}Z^{-1}+\frac{1}{4}Z^{-2}$

*Fig. 3*

EP 0 810 781 A2

18 — FIRST COEFFICIENT GENERATOR

20 — MUX1

22

24 — LATCH

IN

n

k

k

n

n — OUTPUT

MOD

INTPRO

ODD/EVEN

l

12 — CO GENERATOR

$CO(n'-1,\emptyset)\ n'$

FEED — FEED

VSTART

HSTART

14 — MODE COUNTER — FMWEB

l

m

16 — LI GENERATOR

$LI(n''-1,\emptyset)\ n''$

k

34

k

30 — LINE MEMORY — 32

n

n

26 — SECOND COEFFICIENT GENERATOR

k

28 — MUX2

Fig. 2

* odd field

Hstart

Vstart

| IN | n | n+1 | n+2 | n+3 | n+4 |
|---|---|---|---|---|---|
| CO | X | 100 | X | 100 | X |
| LI | 100 | X | 100 | X | 100 |
| MOD CNT | 0 | 1 | 0 | 1 | 0 |
| INPUT OF LINE MEMORY | $\frac{1}{2}(n)$ | X | $\frac{1}{2}(n)$ | X | $\frac{1}{2}(n)$ |
| OUTPUT OF LINE MEMORY | X | $\frac{1}{2}(n-1)$ | X | $\frac{1}{2}(n-1)$ | X |
| OUTPUT | X | $\frac{1}{2}(n)+\frac{1}{2}(n-1)$ | X | $\frac{1}{2}(n)+\frac{1}{2}(n-1)$ | X |

FMWEB

*Fig. 4*